# DEMANDE DE BREVET EUROPEEN

(11) **EP 4 654 182 A1**
(43) Date de publication de la demande: **26.11.2025**
(21) Numéro de dépôt: 25177144.0
(22) Date de dépôt: 16.05.2025
(51) Int. Cl.: G10K 11/172

(54) **STRUCTURE D'ABSORPTION ACOUSTIQUE COMPORTANT AU MOINS UN SYSTÈME DE PARTITION POSITIONNÉ DANS AU MOINS UNE CELLULE POUR FORMER DEUX TYPES DE RÉSONATEURS, PROCÉDÉ DE FABRICATION D'UNE TELLE STRUCTURE**

(30) Priorité: 24.05.2024 FR 2405298
(71) Demandeur: Airbus SAS, 31700 Blagnac Cedex (FR); AIRBUS OPERATIONS (S.A.S.), 31060 Toulouse (FR)
(72) Inventeur: ALBET, Gregory, 31060 Toulouse (FR); LE CLAINCHE, Stéphane, 17300 Rochefort (FR); PRZYBYLA, Benoit, 31060 Toulouse (FR); TEIGNE, Manuel, 17300 Rochefort (FR)
(74) Mandataire: Fantin, Laurent

(57) **Abrégé**

L'invention a pour objet une structure d'absorption acoustique comprenant une structure alvéolaire (52) qui comporte au moins une cellule (60, 60') délimitée par au moins une paroi (58') ainsi qu'au moins un système de partition (62). Ce dernier comprend au moins un sous-ensemble (64, 64') positionné dans la cellule (60, 60') et prévu pour la scinder en au moins deux cavités ainsi qu'au moins une languette (78, 78') reliée au sous-ensemble (64, 64') et présentant une forme en crochet (84) positionnée à cheval sur l'un des premier et deuxième bords d'extrémité (58.1', 58.2') de la paroi (58').

Cette languette (78, 78') facilite la mise en place de chaque système de partition (62) et son maintien dans la cellule (60, 60').

L'invention a également pour objet un aéronef qui comprend au moins une telle structure ainsi qu'un procédé d'assemblage d'une telle structure.

## Description

La présente demande se rapporte à une structure d'absorption acoustique comportant au moins un système de partition positionné dans au moins une cellule pour former deux types de résonateurs ainsi qu'à un procédé de fabrication d'une telle structure.

Selon un mode de réalisation de l'art antérieur, un ensemble de propulsion d'aéronef comprend une nacelle ainsi qu'une turbomachine double flux, positionnée à l'intérieur de la nacelle, qui présente, à l'arrière, un conduit d'éjection primaire par lequel sont évacués les gaz brûlés issus de la combustion. Ce conduit d'éjection primaire comprend, au niveau de sa peau, une structure d'absorption acoustique pour atténuer le bruit sur plusieurs bandes de fréquences, comme les bruits liés à la combustion (300-1000Hz) et les bruits liés au fonctionnement de la turbine (supérieurs ou égaux à 4000Hz) par exemple.

Selon un premier mode de réalisation, une structure d'absorption acoustique comprend au moins une structure alvéolaire positionnée entre une couche acoustiquement résistive en contact avec un milieu dans lequel se propagent des ondes acoustiques et une couche réflectrice. Ce mode de réalisation permet d'obtenir un résonateur % d'onde adapté pour atténuer des ondes sonores avec des fréquences élevées. Selon ce mode de réalisation, la plage de fréquences des ondes sonores atténuées dépend de la hauteur des cellules de la structure alvéolaire.

Selon un deuxième mode de réalisation visible sur la figure 1 et décrit dans le document FR3094668, une structure d'absorption acoustique 10 comprend des première et deuxième structures alvéolaires 12, 14 positionnées entre une couche acoustiquement résistive 16 en contact avec un milieu dans lequel se propagent des ondes acoustiques et une couche réflectrice 18. Cette structure d'absorption acoustique 10 comprend une couche de séparation 20 intercalée entre les première et deuxième structures alvéolaires 12, 14, la première structure alvéolaire 12 étant intercalée entre la couche acoustiquement résistive 16 et la couche de séparation 20, la deuxième structure alvéolaire 14 étant intercalée entre la couche réflectrice 18 et la couche de séparation 20.

Selon ce deuxième mode de réalisation, la couche de séparation 20 comprend des orifices 22 permettant de faire communiquer les cellules de la première structure alvéolaire 12 avec celles de la deuxième structure alvéolaire 14, chaque orifice 22 étant prolongé par un tube 24 positionné dans la deuxième structure alvéolaire 14.

La structure d'absorption acoustique 10 permet d'obtenir deux types de résonateurs, un premier résonateur de type Helmholtz au niveau des cellules de la première structure alvéolaire 12, adapté pour atténuer les ondes sonores basses fréquences, ainsi qu'un deuxième résonateur de type % d'onde au niveau des cellules de la deuxième structure alvéolaire 14, adapté pour atténuer les ondes sonores hautes fréquences.

Selon ce deuxième mode de réalisation, chaque tube 24 est relié par une liaison 24.1 à la couche de séparation puis les première et deuxièmes structures alvéolaires 12, 14 sont reliées par des liaisons 12.1, 14.1 à la couche de séparation 20. Les cellules des première et deuxième structures alvéolaires 12, 14 doivent être parfaitement alignées afin que chaque cellule de la première structure alvéolaire 12 ne communique qu'avec une seule cellule de la deuxième structure alvéolaire 14.

Même si ce deuxième mode de réalisation permet d'atténuer les ondes sonores sur des plages de fréquences plus larges, il n'est pas pleinement satisfaisant car le nombre important de liaisons conduit à augmenter la masse de la structure d'absorption acoustique 10 et à complexifier son procédé de fabrication. Ce dernier est d'autant plus complexe à mettre en œuvre que les cellules des première et deuxième structures alvéolaires doivent être parfaitement alignées pour obtenir un fonctionnement optimal. Selon un autre inconvénient, une telle structure d'absorption acoustique nécessite au moins deux systèmes de drainage, un pour chacune des première et deuxième structures alvéolaires 12, 14, ce qui tend à complexifier la structure d'absorption acoustique. Enfin, la mise en forme selon un profil courbe de la structure d'absorption acoustique 10 s'avère difficile compte tenu des liaisons 12.1, 14.1 qui relient les extrémités des parois délimitant les cellules des première et deuxième parois alvéolaires 12, 14 avec la couche de séparation 20.

Selon un troisième mode de réalisation décrit dans le document US3952831, une structure d'absorption acoustique comprend au moins une structure alvéolaire positionnée entre une couche acoustiquement résistive et une couche réflectrice ainsi qu'une pluralité de cloisons de partition poreuses, positionnées dans les alvéoles de la structure alvéolaire et espacées des couches acoustiquement résistive et réflectrice. Ces différentes cloisons de partition poreuses sont approximativement planes et parallèles aux couches acoustiquement résistive et réflectrice. Selon un mode de réalisation, deux cloisons de partition sont reliées par deux cloisons de jonction qui enjambent une paroi de la structure alvéolaire et sont plaquées contre cette dernière. Cette solution n'est pas pleinement satisfaisante car elle ne permet pas d'obtenir deux types de résonateurs ce qui limite le nombre de caractéristiques ajustables indépendamment les unes des autres en matière d'atténuation acoustique.

Selon un quatrième mode de réalisation décrit dans les documents US2020/265821 et FR3082987, une structure d'atténuation acoustique comprend au moins une structure alvéolaire positionnée entre une couche acoustiquement résistive et une couche réflectrice ainsi qu'une pluralité de cloisons de partition tronconiques, positionnées dans les alvéoles de la structure alvéolaire. Chaque cloison de partition tronconique est reliée au niveau de sa section la plus large à une peau plaquée contre la couche acoustiquement résistive et présente au niveau de sa section la plus petite un orifice espacé de la couche réflectrice. Même si cette solution permet d'obtenir deux types de résonateurs, elles n'est pas pleinement satisfaisante, car la cloison de partition présente nécessairement une forme évasée entre l'orifice et la couche acoustiquement résistive, ce qui limite le nombre de caractéristiques ajustables indépendamment les unes des autres en matière d'atténuation acoustique.

La présente invention vise à remédier à tout ou partie des inconvénients de l'art antérieur.

A cet effet, l'invention a pour objet une structure d'absorption acoustique comprenant une couche acoustiquement résistive, une couche réflectrice ainsi qu'au moins une structure alvéolaire intercalée entre la couche acoustiquement résistive et la couche réflectrice, la structure alvéolaire comprenant au moins une cellule délimitée par au moins une paroi présentant des premier et deuxième bords d'extrémité positionnés au niveau de la couche acoustiquement résistive et de la couche réflectrice ainsi qu'au moins un système de partition comportant au moins un sous-ensemble positionné dans la cellule et configuré pour scinder la cellule en au moins deux cavités qui communiquent entre elles et forment deux types de résonateurs.

Selon l'invention, le système de partition comprend au moins une languette qui s'étend entre des première et deuxième extrémités, la première extrémité de la languette étant reliée au sous-ensemble du système de partition, la deuxième extrémité de la languette présentant une forme en crochet positionnée à cheval sur l'un des premier et deuxième bords d'extrémité de la paroi. En complément, chaque sous-ensemble du système de partition comprend :
- au moins une cloison de partition qui présente un pourtour et au moins un orifice traversant,
- au moins un premier conduit, positionné dans le prolongement de l'orifice traversant, qui s'étend entre des première et deuxième extrémités, la première extrémité étant reliée à la première ou deuxième cloison de partition, la deuxième extrémité étant distante de la couche acoustiquement résistive ou de la couche réflectrice.

Cette solution facilite le positionnement et le maintien des systèmes de partition dans les cellules de la structure alvéolaire. De plus, la présence d'une cloison de partition et d'un conduit permet d'augmenter le nombre de caractéristiques ajustables indépendamment les unes des autres en matière d'atténuation acoustique.

Selon une autre caractéristique, au moins un des premier et deuxième bords d'extrémité d'au moins une paroi à laquelle est accrochée au moins une languette comprend au moins une première découpe dimensionnée pour loger les deuxièmes extrémités des première et deuxième languettes ou la forme en crochet de la deuxième extrémité de la languette, la deuxième extrémité de chaque languette présentant au moins une deuxième découpe permettant de faire communiquer les cellules.

Selon une autre caractéristique, au moins une cloison de partition comprend une partie centrale rigide ainsi qu'une partie périphérique souple en un matériau déformable de manière élastique permettant à la partie périphérique d'épouser les parois de la cellule.

Selon une autre caractéristique, au moins une cloison de partition est collée aux parois de la cellule, sur tout son pourtour.

Selon une autre caractéristique, au moins une cloison de partition est positionnée dans un plan formant un angle compris entre 5 à 70° avec un plan parallèle à la couche acoustiquement résistive.

Selon une autre caractéristique, la structure alvéolaire comprend au moins des première et deuxième cellules séparées par une paroi commune. En complément, le système de partition comporte des premier et deuxième sous-ensembles positionnés respectivement dans les première et deuxième cellules, le système de partition comprenant respectivement des première et deuxième languettes, les deuxièmes extrémités des première et deuxième languettes étant reliées entre elles de manière à constituer une forme en crochet positionnée à cheval sur l'un des premier et deuxième bords d'extrémité de la paroi commune.

Selon une autre caractéristique, chaque languette présente une longueur déterminée en fonction des caractéristiques acoustiques recherchées pour les cavités des cellules.

Selon une autre caractéristique, la deuxième extrémité de chaque languette est située au niveau de la couche acoustiquement résistive.

Selon une autre caractéristique, la deuxième extrémité de chaque languette est située au niveau de la couche réflectrice.

Selon une autre caractéristique, au moins un conduit est accolé contre au moins une paroi de la cellule.

Selon une autre caractéristique, au moins un conduit est distant des parois de la cellule.

L'invention a également pour objet un aéronef comprenant au moins une structure d'absorption acoustique selon l'une des caractéristiques précédentes.

Enfin, l'invention a également pour objet un procédé d'assemblage d'une structure d'absorption acoustique selon l'une des caractéristiques précédentes. Ce procédé d'assemblage comprend une étape de fabrication des systèmes de partition, une étape de fabrication de la structure alvéolaire, une étape de mise en place des systèmes de partition en insérant les cloisons de partition dans des cellules de la structure alvéolaire, la forme en crochet des deuxièmes extrémités des languettes des systèmes de partition étant positionnée à cheval sur une paroi de la structure alvéolaire, ainsi que des étapes de mise en place de la couche acoustiquement résistive et de la couche réflectrice.

Selon une autre caractéristique, préalablement à l'étape de mise en place des systèmes de partition, le procédé d'assemblage comprend une étape de réalisation de premières découpes au niveau du premier ou deuxième bord d'extrémité des parois communes, les deuxièmes extrémités des première et deuxième languettes de chaque système de partition coopérant avec l'une des premières découpes après l'étape de mise en place des systèmes de partition. D'autres caractéristiques et avantages ressortiront de la description de l'invention qui va suivre, description donnée à titre d'exemple uniquement, en regard des dessins annexés parmi lesquels :
- La figure 1 est une coupe schématique d'une structure d'absorption acoustique illustrant un mode de réalisation de l'art antérieur,
- La figure 2 est une vue latérale d'un aéronef,
- La figure 3 est une coupe longitudinale d'un ensemble de propulsion d'aéronef,
- La figure 4 est une vue en perspective de deux cellules d'une structure d'absorption acoustique et d'un système de partition positionné à cheval dans les deux cellules illustrant un mode de réalisation de l'invention,
- La figure 5 est une vue en perspective des deux cellules et du système de partition visibles sur la figure 4 lors d'une étape d'insertion dans les deux cellules,
- La figure 6 est une vue de dessus d'une structure alvéolaire illustrant un mode de réalisation de l'invention,
- La figure 7 est coupe longitudinale d'une structure d'absorption acoustique illustrant un autre mode de réalisation de l'invention,
- La figure 8 est une vue en perspective d'une structure d'absorption acoustique courbe illustrant un mode de réalisation de l'invention,
- La figure 9 est une coupe longitudinale d'une cellule et d'un système de partition illustrant un mode de réalisation de l'invention,
- La figure 10 est une coupe longitudinale d'une cellule et d'un système de partition illustrant un autre mode de réalisation de l'invention,
- La figure 11 est une coupe longitudinale d'une cellule et d'un système de partition illustrant un autre mode de réalisation de l'invention,
- La figure 12 est une coupe longitudinale d'une cellule et d'un système de partition illustrant un autre mode de réalisation de l'invention,
- La figure 13 est une vue en perspective d'une partie d'une structure d'absorption acoustique illustrant un autre mode de réalisation de l'invention,
- La figure 14 est une coupe selon le plan P14 de la figure 13,
- La figure 15 est une coupe schématique d'une partie d'une structure d'absorption acoustique illustrant un autre mode de réalisation de l'invention.

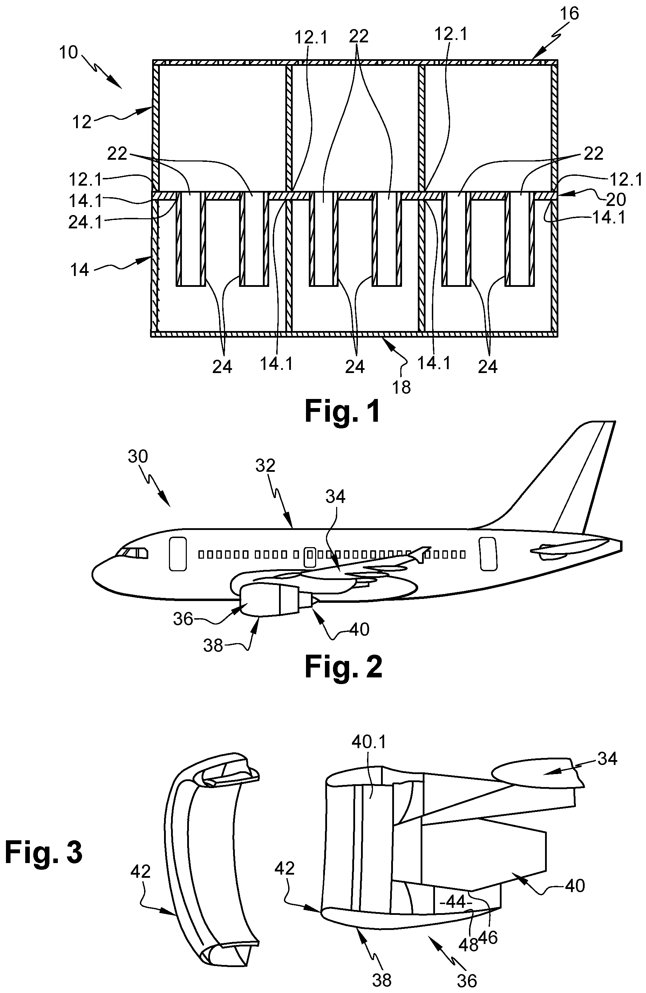

Sur la figure 2, on a représenté un aéronef 30 qui présente un fuselage 32, deux ailes 34 disposées de part et d'autre du fuselage 32 ainsi que des ensembles de propulsion 36 fixés sous les ailes 34. Chaque ensemble de propulsion 36 comprend une nacelle 38 et une motorisation 40 positionnée à l'intérieur de la nacelle 38.

Selon un mode de réalisation visible sur la figure 3, la nacelle 38 comprend, à l'avant, une entrée d'air 42 qui présente un conduit intérieur 44 configuré pour canaliser un flux d'air en direction d'une soufflante 40.1 de la motorisation 40. L'ensemble de propulsion 36 comprend, à l'arrière, un conduit d'éjection délimité par une première paroi 46 solidaire de la motorisation 40 et par une deuxième paroi 48 solidaire de la nacelle 38.

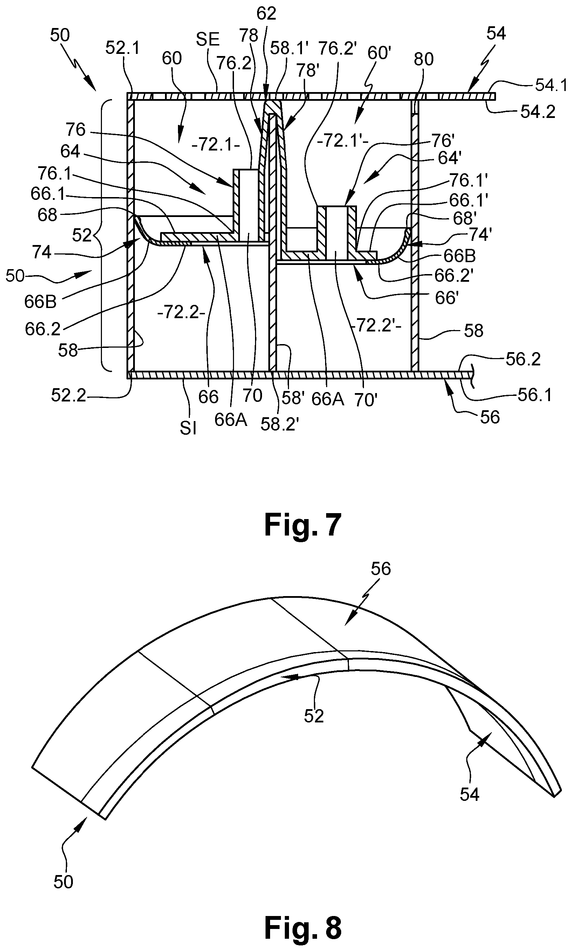

Selon une configuration, le conduit intérieur 44 ainsi que les première et deuxième parois 46, 48 comprennent chacun au moins une structure d'absorption acoustique 50 (visible sur la figure 7). Bien entendu, l'invention n'est pas limitée à ces emplacements pour la structure d'absorption acoustique 50. Ainsi, cette dernière peut être positionnée au niveau de parois qui présentent une surface en contact avec un milieu dans lequel se propagent des ondes sonores.

Comme illustré sur la figure 7, chaque structure d'absorption acoustique 50 comprend une surface extérieure SE en contact avec un milieu dans lequel se propagent des ondes acoustiques et une surface intérieure SI opposée à la surface extérieure SE.

Chaque structure d'absorption acoustique 50 comprend au moins une structure alvéolaire 52 intercalée entre une couche acoustiquement résistive 54 perméable aux ondes sonores et une couche réflectrice 56 imperméable aux ondes sonores. La couche acoustiquement résistive 54 présente une première face 54.1 correspondant à la surface extérieure SE ainsi qu'une deuxième face 54.2 orientée vers la structure alvéolaire 52 et reliée à cette dernière. La couche réflectrice 56 présente une première face 56.1 correspondant à la surface intérieure SI ainsi qu'une deuxième face 56.2 orientée vers la structure alvéolaire 52 et reliée à cette dernière.

La couche acoustiquement résistive 54, la couche réflectrice 56, la liaison entre la couche acoustiquement résistive 54 et la structure alvéolaire 52 ainsi que la liaison entre la couche réflectrice 56 et la structure alvéolaire 52 ne sont pas plus décrites car elles peuvent être identiques à celles de l'art antérieur.

La structure alvéolaire 52 s'étend entre une première face 52.1 en contact avec la couche acoustiquement résistive 54 ainsi qu'une deuxième face 52.2 en contact avec la couche réflectrice 56 et comprend une multitude de parois 58 qui présentent chacune des premiers et deuxièmes bords positionnés respectivement au niveau des première et deuxième faces 52.1, 52.2. Ces parois 58 sont reliées entre elles de manière à délimiter des cellules 60 débouchant au niveau des première et deuxième faces 52.1, 52.2.

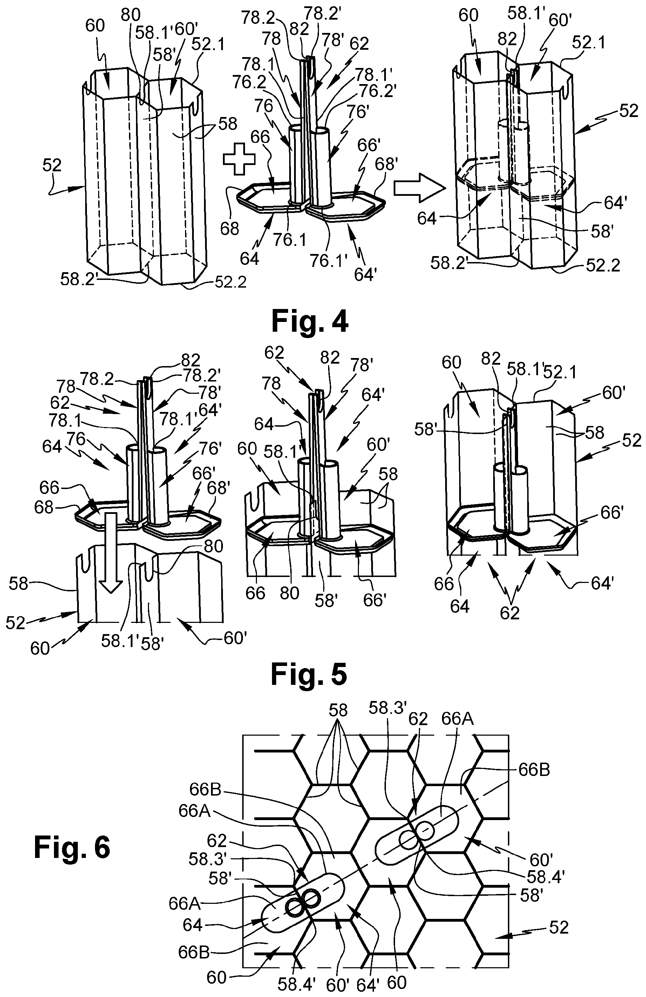

Selon un mode de réalisation, la structure alvéolaire 52 est une structure en nid d'abeilles, comme illustré sur la figure 6. Pour donner un ordre de grandeur, chaque cellule 60 présente une section transversale hexagonale avec six côtés identiques de largeur comprise entre 5 et 12 mm. Chaque cellule 60 présente une hauteur (correspondant à la distance séparant les première et deuxième faces 52.1, 52.2) comprise entre 30 et 70 mm.

Bien entendu, l'invention n'est pas limitée à ce mode de réalisation pour les cellules 60. Chacune d'elles débouche au niveau de première et deuxième extrémités obturées respectivement par la couche acoustiquement résistive 54 et la couche réflectrice 56. Chacune d'elles est délimitée par au moins une paroi 58 et présente une section transversale délimitée par la (ou les) paroi(s) 58.

La structure alvéolaire 52 comprend au moins un système de partition 62 positionné à cheval dans des première et deuxième cellules 60, 60', le système de partition 62 comportant un premier sous-ensemble 64 positionné dans la première cellule 60 ainsi qu'un deuxième sous-ensemble 64' positionné dans la deuxième cellule 60' ; les première et deuxième cellules étant séparées par une paroi commune 58', les premier et deuxième sous-ensembles 64, 64' étant séparés par la paroi commune 58' et reliés entre eux.

Selon une configuration, la structure alvéolaire 52 comprend plusieurs systèmes de partition 62 positionnés chacun dans deux cellules 60, 60' adjacentes. Selon un agencement, dans au moins une zone de la structure alvéolaire 52, cette dernière comprend un premier ou deuxième sous-ensemble 64, 64' dans chaque cellule 60, 60'.

La paroi commune 58' séparant les première et deuxième cellules 60, 60' présente des premier et deuxième bords d'extrémité 58.1', 58.2' orientés respectivement vers la couche acoustiquement résistive 54 et la couche réflectrice 56 ainsi que des premier et deuxième bords latéraux 58.3', 58.4' (visible sur la figure 6) sensiblement parallèles entre eux, reliant les premier et deuxième bords d'extrémité 58.1', 58.2'.

Comme illustré sur la figure 7, chacun des premier et deuxième sous-ensembles 64, 64' du système de partition 62 comprend au moins une première ou deuxième cloison de partition 66, 66' qui présente un pourtour 68, 68' ainsi qu'au moins un orifice traversant 70, 70' qui traverse ladite première ou deuxième cloison de partition 66, 66'. Lorsque le premier ou deuxième sous-ensemble 64, 64' du système de partition 62 est positionné dans la première ou deuxième cellule 60, 60', la première ou deuxième cloison de partition 66, 66' est en contact avec les parois 58 de la première ou deuxième cellule 60, 60', sur tout le pourtour 68, 68', de manière sensiblement étanche. Ainsi, la première ou deuxième cloison de partition 66, 66' scinde la première ou deuxième cellule 60, 60' en des cavités supérieure et inférieure 72.1, 72.2, 72.1', 72.2' qui communiquent via l'orifice traversant 70, 70'. La première ou deuxième cloison de partition 66, 66' présente des première et deuxième faces 66.1, 66.2, 66.1', 66.2' orientées respectivement vers les cavités supérieure et inférieure 72.1, 72.2, 72.1', 72.2'.

Selon une configuration, pour améliorer l'étanchéité entre la première ou deuxième cloison de partition 66, 66' et les parois 58 délimitant la première ou deuxième cellule 60, 60', au moins une des première et deuxième cloisons de partition 66, 66' comprend un système d'étanchéité 74, 74' qui s'étend sur tout le pourtour 68, 68'.

Selon un mode de réalisation, au moins une des première et deuxième cloisons de partition 66, 66' comprend une partie centrale 66A rigide ainsi qu'une partie périphérique 66B souple, sous la forme d'une membrane, en un matériau déformable de manière élastique permettant à la partie périphérique 66B d'épouser les formes des parois 58 de la première ou deuxième cellule 60, 60'. Bien entendu, l'invention n'est pas limitée à ce mode de réalisation pour le système d'étanchéité 74, 74'. Au moins une des première et deuxième cloisons de partition 66, 66' pourrait être collée aux parois 58 des cellules 60, 60' sur tout son pourtour 68, 68'.

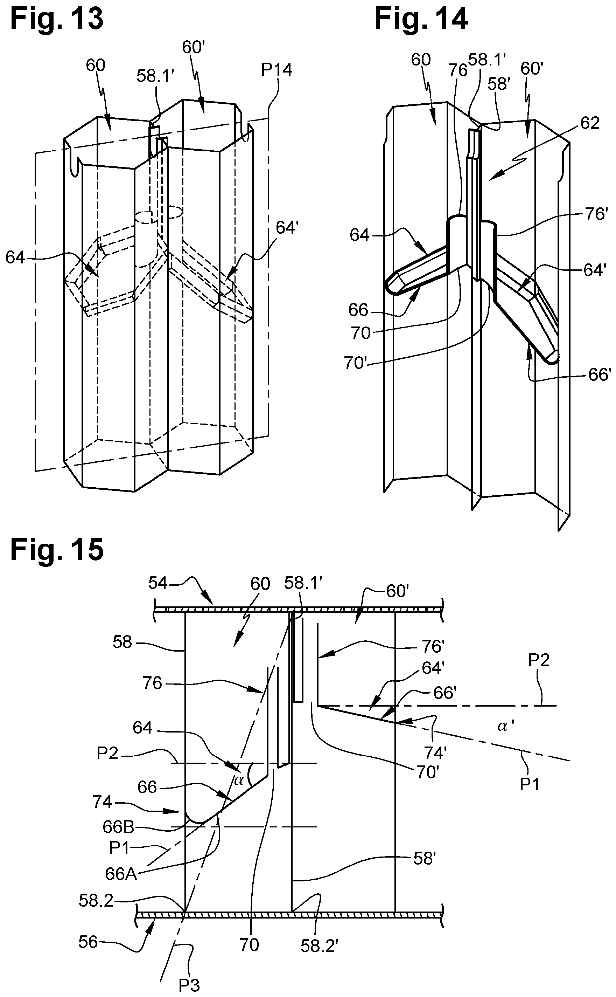

A l'exception de sa périphérie, chaque cloison de partition 66, 66' est sensiblement plane. Selon un mode de réalisation, à l'exception de l'orifice traversant 70, 70', chaque cloison de partition 66, 66' est pleine et non poreuse. Comme illustré sur les figures 4, 5, 7, 9 à 12, au moins une cloison de partition 66, 66' est sensiblement parallèle à la couche acoustiquement résistive 54. Selon un autre mode de réalisation visible sur les figures 13 à 15, au moins une cloison de partition 66, 66' est positionnée dans un plan P1 formant un angle α, α' non nul, compris entre 5 à 70°, avec un plan P2 parallèle à la couche acoustiquement résistive 54. Selon une configuration, le plan P1 est sensiblement parallèle à un plan P3 passant par les premier et deuxième bords d'extrémité 58.1', 58.2 de deux parois 58', 58 opposées de la cellule 60, 60' dans laquelle est positionnée la cloison de partition 66, 66'. Les cloison de partition 66, 66' d'un même système de partition 62 peuvent être inclinées de la même manière comme illustré sur les figures 13 et 14 ou de manière différente comme illustré sur la figure 15.

Selon une particularité de l'invention, chacun des premier et deuxième sous-ensembles 64, 64' du système de partition 62 comprend au moins un premier ou deuxième conduit 76, 76' qui s'étend entre des première et deuxième extrémités 76.1, 76.2, 76.1', 76.2', la première extrémité 76.1, 76.1' étant reliée de manière étanche à la première ou deuxième cloison de partition 66, 66' (plus particulièrement à la partie centrale 66A de la première ou deuxième cloison de partition 66, 66'), la deuxième extrémité 76.2, 76.2' étant distante de la couche acoustiquement résistive 54 ou de la couche réflectrice 56. Le premier ou deuxième conduit 76, 76' est positionné dans la cavité supérieure 72.1, 72.1' et dans le prolongement de l'orifice traversant 70, 70'. Le premier ou deuxième conduit 76, 76' présente un diamètre intérieur sensiblement égal au diamètre de l'orifice traversant 70, 70'.

Pour chaque sous-ensembles 64, 64' du système de partition 62, le premier ou deuxième conduit 76, 76' est sécant et forme un angle non nul avec la première ou deuxième cloison de partition 66, 66'.

Le fait de prévoir une cloison de partition 66, 66' et un conduit 76, 76' permet d'ajuster indépendamment d'une part les dimensions et éventuellement la géométries des cavités supérieure et inférieure 72.1, 72.2, 72.1', 72.2' séparées par la cloison de partition 66, 66' en ajustant le positionnement de cette dernière et éventuellement son inclinaison, et d'autre, la longueur et la section intérieure du conduit 76, 76', ce qui permet d'augmenter le nombre de caractéristiques ajustables indépendamment les unes des autres du système de partition 62 et par conséquent les possibilités en matière d'atténuation acoustique.

La cloison de partition 66, 66' ainsi que le conduit 76, 76' de chacun des premier et deuxième sous-ensembles 64, 64' sont réalisés d'un seul tenant par un procédé de fabrication additive par exemple.

Selon un autre mode de réalisation, la cloison de partition 66, 66' et le conduit 76, 76' de chacun des premier et deuxième sous-ensembles 64, 64' sont réalisés de manière dissociée puis reliés entre eux par soudage par exemple.

La cloison de partition 66, 66' et le conduit 76, 76' de chacun des premier et deuxième sous-ensembles 64, 64' peuvent être métalliques ou réalisés en tout autre matériau approprié.

Bien entendu, l'invention n'est pas limitée à ce mode de réalisation pour les premier et deuxième sous-ensembles 64, 64'. Chacun des premier et deuxième sous-ensembles 64, 64' est configuré pour scinder chacune des première et deuxième cellules 60, 60' en au moins deux cavités 72.1, 72.2, 72.1', 72.2' qui communiquent entre elles et forment deux types de résonateurs.

Le système de partition 62 comprend des première et deuxième languettes 78, 78' qui s'étendent entre des première et deuxième extrémités 78.1, 78.2, 78.1', 78.2', la première extrémité 78.1, 78.1' de chaque première ou deuxième languette 78, 78' étant reliée à la cloison de partition 66, 66' et/ou au conduit 76, 76' du premier ou deuxième sous-ensemble 64, 64' du système de partition 62, les deuxièmes extrémités 78.2, 78.2' des première et deuxième languettes 78, 78' étant reliées entre elles de manière à constituer une forme en crochet positionnée à cheval sur l'un des premier et deuxième bords d'extrémité 58.1', 58.2' de la paroi commune 58'.

Selon un agencement, chacune des première et deuxième languettes 78, 78' est espacée des premier et deuxième bords latéraux 58.3', 58.4' de la paroi commune 58 et sensiblement centrées par rapport auxdits premier et deuxième bords latéraux 58.3', 58.4'. Ainsi, chacune des première et deuxième languettes 78, 78' présente une largeur (dimension prise parallèlement à la paroi commune 58' et à la couche acoustiquement résistive 54) inférieure à la largeur de la paroi commune 58' (dimension correspondant à la distance séparant les premier et deuxième bords latéraux 58.3', 58.4').

Selon un mode de réalisation, les premières extrémités 78.1, 78.1' des première et deuxième languettes 78, 78' sont reliées respectivement aux deuxièmes extrémités 76.2, 76.2' des premier et deuxième conduits 76, 76'. Ainsi, les première et deuxième languettes 78, 78' sont situées dans le prolongement des premier et deuxième conduits 76, 76'.

Les première et deuxième languettes 78, 78' présentent des longueurs (distances séparant les première et deuxième extrémités 78.1, 78.2, 78.1', 78.2') sensiblement identiques. La longueur de chacune des première et deuxième languettes 78, 78' est déterminée en fonction des caractéristiques acoustiques recherchées pour les cavités supérieure et inférieure 72.1, 72.2, 72.1', 72.2'.

Selon un agencement, les premier et deuxième conduits 76, 76' sont faiblement espacés et positionnés de part et d'autre de la paroi commune 58'. Les première et deuxième languettes 78, 78' sont faiblement espacées et positionnées de part et d'autre de la paroi commune 58', les deuxièmes extrémités 78.2, 78.2' des première et deuxième languettes 78, 78' sont positionnées au niveau du premier bord d'extrémité 58.1' de la paroi commune 58'.

Selon une configuration, au moins un des premier et deuxième bords d'extrémité 58.1', 58.2' d'au moins une paroi 58' à laquelle est accrochée au moins une languette 78, 78' comprend au moins une première découpe 80 dimensionnée pour loger les deuxièmes extrémités 78.2, 78.2' des première et deuxième languettes 78, 78' afin que ces dernières, logées dans la première découpe 80, ne soient pas en saillie pas rapport à la première ou deuxième face 52.1, 52.2 de la structure alvéolaire 52. Cette première découpe 80 est centrée par rapport aux premier et deuxième bords latéraux 58.3', 58.4' de la paroi commune 58'. Ainsi, cette première découpe 80 contribue au centrage du système de partition 62 dans les première et deuxième cellules. Selon une configuration, chaque première découpe 80 présentent une forme en U. Selon un agencement, cette première découpe 80 est prévue pour la fonction de drainage.

Selon un mode de réalisation, les deuxièmes extrémités 78.2, 78.2' des première et deuxième languettes 78, 78' présentent au moins une deuxième découpe 82 permettant de faire communiquer les première et deuxième cellules 60, 60'. Cette deuxième découpe 82 est positionnée dans la première découpe 80.

Les deuxièmes découpes 82 ainsi que les premières découpes 80 non occupées par les deuxièmes extrémités 78.2, 78.2' de première et deuxième languettes 78, 78' forment un réseau de drainage.

Selon un premier agencement, pour chaque système de partition 62, les cavités supérieures 72.1, 72.1' et les conduits 76, 76' sont situés entre les première et deuxième cloisons de partition 66, 66' et la couche acoustiquement résistive 54, le premier bord d'extrémité 58.1' de la paroi commune 58' et les deuxièmes extrémités 78.2, 78.2' des première et deuxième languettes 78, 78' étant situés au niveau de la couche acoustiquement résistive 54. Les cavités inférieures 72.2, 72.2' sont situées entre les première et deuxième cloisons de partition 66, 66' et la couche réflectrice 56.

Selon un deuxième agencement, pour chaque système de partition 62, les cavités supérieures 72.1, 72.1' et les conduits 76, 76' sont situés entre les première et deuxième cloisons de partition 66, 66' et la couche réflectrice 56, le premier bord d'extrémité 58.1' de la paroi commune 58' et les deuxièmes extrémités 78.2, 78.2' des première et deuxième languettes 78, 78' étant situés au niveau de la couche réflectrice 56. Les cavités inférieures 72.2, 72.2' sont situées entre les première et deuxième cloisons de partition 66, 66' et la couche acoustiquement résistive 54.

Selon un mode de réalisation visible sur les figures 4 et 5, pour au moins un système de partition 62, les premier et deuxième sous-ensembles 64, 64' sont symétriques par rapport à la paroi commune 58' et les première et deuxième languettes 78, 78' ont la même longueur. Selon un autre mode de réalisation visible sur la figure 7, pour au moins un système de partition 62, les premier et deuxième sous-ensembles 64, 64' ne sont pas symétriques par rapport à la paroi commune 58' et/ou les première et deuxième languettes 78, 78' ont des longueurs différentes.

Selon un mode opératoire, un procédé d'assemblage d'une structure d'absorption acoustique comprend une étape de fabrication des systèmes de partition 62, une étape de fabrication de la structure alvéolaire 52 puis une étape de mise en place des systèmes de partition 62 en insérant les cloisons de partition 66, 66' dans les cellules 60, 60' de la structure alvéolaire 52, les formes en crochet des languettes 78, 78' étant positionnées à cheval sur l'un des bords d'extrémité des parois 58' délimitant les cellules 60.

Préalablement à l'étape de mise en place des systèmes de partition 62, le procédé d'assemblage comprend une étape de réalisation des premières découpes 80 de manière à former un réseau de drainage après l'étape de mise en place des systèmes de partition 62, les deuxièmes extrémités 78.2, 78.2' des languettes 78, 78' de chaque système de partition 62 coopérant avec l'une des premières découpes 80.

Après la mise en place de tous les systèmes de partition 62, le procédé d'assemblage comprend des étapes de mise en place de la couche acoustiquement résistive 54 et la couche réflectrice 56. Le procédé d'assemblage peut comprendre une étape de mise en forme pour obtenir une structure d'absorption acoustique 50 courbe, comme illustré sur la figure 8.

Le système de partition 62 permet de créer simultanément dans deux cellules 60, 60' des cavités supérieure et inférieure 72.1, 72.1', 72.2, 72.2' dans chacune des cellules 60, 60', les cavités supérieures 72.1, 72.1' formant chacune un premier résonateur de type Helmholtz, les cavités inférieures 72.2, 72.2' formant chacune un résonateur de type % d'onde.

Le fait de prévoir, pour chaque système de partition 62, des premier et deuxième sous-ensembles 64, 64' positionnés respectivement dans des première et deuxième cellules 60, 60' séparées par une paroi commune 58', les premier et deuxième sous-ensembles 64, 64' comportant des première et deuxième languettes 78, 78' reliées entre elles et positionnées à cheval sur la paroi commune 58', facilite la mise en place des systèmes de partition et leur immobilisation dans les cellules 60, 60'. Selon l'invention, les cloisons de partition 66, 66' sont séparées de la couche acoustiquement résistive 54 et la couche réflectrice 56 d'une distance précise qui est fonction des longueurs des première et deuxième languettes 78, 78', ces longueurs étant déterminées en fonction des caractéristiques acoustiques recherchées pour les résonateurs.

Le fait de positionner, pour chaque système de partition 62, les deuxièmes extrémités 78.2, 78.2' des première et deuxième languettes 78, 78' dans une première découpe 80 simplifie son positionnement.

Bien entendu, l'invention n'est pas limitée aux modes de réalisation précédemment décrits.

Le système de partition 62 peut ne comprendre qu'un seul sous-ensemble 64 positionné dans une cellule 60. Comme précédemment, le sous-ensemble 64 comporte une cloison de partition 66 qui scinde la cellule 60 en deux cavités 72.1, 72.2, un orifice traversant 70 qui fait communiquer les deux cavités 72.1, 72.2 ainsi qu'un conduit 76 qui prolonge l'orifice traversant 70.

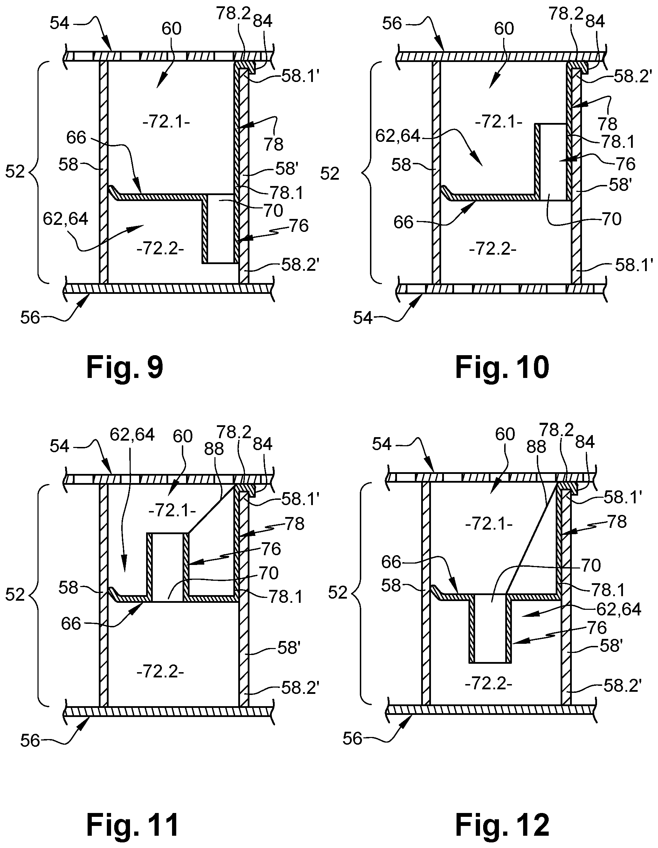

Selon un premier agencement, au moins un conduit 76 est positionné entre la cloison de partition 66 et la couche acoustiquement résistive 54, comme illustré sur les figures 7 et 11. Selon un deuxième agencement, le conduit 76 est positionné entre la cloison de partition 66 et la couche réflectrice 56, comme illustré sur les figures 9, 10 et 12.

Selon les cas, au moins un conduit 76 est accolé contre au moins une paroi 58' de la cellule 60, comme illustré sur les figures 9 et 10, ou distant des parois 58, 58' de la cellule 60 et éventuellement centrés, comme illustré sur les figures 11 et 12.

Le système de partition 62 comprend au moins une languette 78 pour relier le sous-ensemble 64 à l'une des parois 58, 58' de la cellule 60. La languette 78 peut être reliée à la paroi 58' contre laquelle est accolé le conduit 76. En variante, le conduit 76 peut être accolé contre une paroi 58' différente de celle à laquelle est reliée la languette 78.

Le conduit 76 et la languette 78 peuvent être positionnés dans la même cavité 72.1, 72.2, comme illustré sur les figures 7, 10 et 11, ou dans des cavités 72.1, 72.2 différentes de part et d'autre de la cloison de partition 66, comme illustré sur les figures 9 et 12.

La languette 78 comprend une première extrémité 78.1 reliée au sous-ensemble 64 ainsi qu'une deuxième extrémité 78.2 reliée à l'un des bords d'extrémité 58.1', 58.2' de la paroi 58'. La première extrémité 78.1 peut être reliée au conduit 76, comme illustré sur les figures 9 et 10, ou à la cloison de partition 66, comme illustré sur les figures 11 à 12.

Selon les modes de réalisation visibles sur les figures 9 à 12, la deuxième extrémité 78.2 présente une forme en crochet 84 positionnée à cheval sur le bord d'extrémité 58.1', 58.2' de la paroi 58'. En complément, au moins un des premier et deuxième bords d'extrémité 58.1', 58.2' de la paroi 58' comprend au moins une première découpe 80 dimensionnée pour loger la forme en crochet 84 de la deuxième extrémité 78.2 de la languette 78. Comme précédemment, la deuxième extrémité 78.2 de chaque languette 78 présente au moins une deuxième découpe permettant de faire communiquer les première et deuxième cellules 60, 60'.

Pour rigidifier la languette 78, le système de partition 62 peut comprendre au moins une nervure 88 reliant la languette 78 et la cloison de partition 66 et/ou le conduit 76.

## Revendications

1. Structure d'absorption acoustique comprenant une couche acoustiquement résistive (54), une couche réflectrice (56) ainsi qu'au moins une structure alvéolaire (52) intercalée entre la couche acoustiquement résistive (54) et la couche réflectrice (56), la structure alvéolaire (52) comportant au moins une cellule (60, 60') délimitée par au moins une paroi (58') présentant des premier et deuxième bords d'extrémité (58.1', 58.2') positionnés au niveau de la couche acoustiquement résistive (54) et de la couche réflectrice (56) ainsi qu'au moins un système de partition (62) comportant au moins un sous-ensemble (64, 64') positionné dans la cellule (60) et configuré pour scinder la cellule (60, 60') en au moins deux cavités (72.1, 72.2, 72.1', 72.2') qui communiquent entre elles et forment deux types de résonateurs ; **caractérisée en ce que** le système de partition (62) comprend au moins une languette (78, 78') qui s'étend entre des première et deuxième extrémités (78.1, 78.2, 78.1', 78.2'), la première extrémité (78.1, 78.1') de la languette (78, 78') étant reliée au sous-ensemble (64, 64') du système de partition (62), la deuxième extrémité (78.2, 78.2') de la languette (78, 78') présentant une forme en crochet (84) positionnée à cheval sur l'un des premier et deuxième bords d'extrémité (58.1', 58.2') de la paroi (58') et **en ce que** chaque sous-ensemble (64, 64') du système de partition (62) comprend :
- au moins une cloison de partition (66, 66') qui présente un pourtour (68, 68') et au moins un orifice traversant (70, 70'),
- au moins un premier conduit (76, 76'), positionné dans le prolongement de l'orifice traversant (70, 70'), qui s'étend entre des première et deuxième extrémités (76.1, 76.2, 76.1', 76.2'), la première extrémité (76.1, 76.1') étant reliée à la première ou deuxième cloison de partition (66, 66'), la deuxième extrémité (76.2, 76.2') étant distante de la couche acoustiquement résistive (54) ou de la couche réflectrice (56).

2. Structure d'absorption acoustique selon la revendication 1, **caractérisée en ce qu'**au moins un des premier et deuxième bords d'extrémité (58.1', 58.2') d'au moins une paroi (58') à laquelle est accrochée au moins une languette (78, 78') comprend au moins une première découpe (80) dimensionnée pour loger les deuxièmes extrémités (78.2, 78.2') des première et deuxième languettes (78, 78') ou la forme en crochet (84) de la deuxième extrémité (78.2) de la languette (78), la deuxième extrémité (78.2, 78.2') de chaque languette (78, 78') présentant au moins une deuxième découpe (82) permettant de faire communiquer les cellules (60, 60').

3. Structure d'absorption acoustique selon l'une des revendications précédentes, **caractérisée en ce qu'**au moins une cloison de partition (66, 66') comprend une partie centrale (66A) rigide ainsi qu'une partie périphérique (66B) souple en un matériau déformable de manière élastique permettant à la partie périphérique (66B) d'épouser les parois (58) de la cellule (60, 60').

4. Structure d'absorption acoustique selon l'une des revendications 1 à 2, **caractérisée en ce qu'**au moins une cloison de partition (66, 66') est collée aux parois (58) de la cellule (60, 60') sur tout son pourtour (68, 68').

5. Structure d'absorption acoustique selon l'une des revendications précédentes, **caractérisée en ce qu'**au moins une cloison de partition (66, 66') est positionnée dans un plan (P1) formant un angle (α) compris entre 5 à 70° avec un plan (P2) parallèle à la couche acoustiquement résistive (54).

6. Structure d'absorption acoustique selon l'une des revendications précédentes, **caractérisée en ce que** la structure alvéolaire (52) comprend au moins des première et deuxième cellules (60, 60') séparées par une paroi commune (58'), **en ce que** le système de partition (62) comporte des premier et deuxième sous-ensembles (64, 64') positionnés respectivement dans les première et deuxième cellules (60, 60') et **en ce que** le système de partition (62) comprend respectivement des première et deuxième languettes (78, 78'), les deuxièmes extrémités (78.2, 78.2') des première et deuxième languettes (78, 78') étant reliées entre elles de manière à constituer une forme en crochet positionnée à cheval sur l'un des premier et deuxième bords d'extrémité (58.1', 58.2') de la paroi commune (58').

7. Structure d'absorption acoustique selon l'une des revendications précédentes, **caractérisée en ce que** chaque languette (78, 78') présente une longueur déterminée en fonction des caractéristiques acoustiques recherchées pour les cavités (72.1, 72.2, 72.1', 72.2') des cellules (60, 60').

8. Structure d'absorption acoustique selon l'une des revendications précédentes, **caractérisée en ce que** la deuxième extrémité (78.2, 78.2') de chaque languette (78, 78') est située au niveau de la couche acoustiquement résistive (54).

9. Structure d'absorption acoustique selon l'une des revendications 1 à 7, **caractérisée en ce que** la deuxième extrémité (78.2, 78.2') de chaque languette (78, 78') est située au niveau de la couche réflectrice (56).

10. Structure d'absorption acoustique selon l'une des revendications précédentes, **caractérisée en ce qu'**au moins un conduit (76) est accolé contre au moins une paroi (58') de la cellule (60).

11. Structure d'absorption acoustique selon l'une des revendications 1 à 9, **caractérisée en ce qu'**au moins un conduit (76) est distant des parois (58, 58') de la cellule (60).

12. Aéronef comprenant au moins une structure d'absorption acoustique selon l'une des revendications précédentes.

13. Procédé d'assemblage d'une structure d'absorption acoustique selon l'une des revendications 1 à 11, **caractérisé en ce que** le procédé d'assemblage comprend une étape de fabrication des systèmes de partition (62), une étape de fabrication de la structure alvéolaire (52), une étape de mise en place des systèmes de partition (62) en insérant les cloisons de partition (66, 66') dans des cellules (60, 60') de la structure alvéolaire (52), la forme en crochet des deuxièmes extrémités (78.1, 78.1') des languettes (78, 78') des systèmes de partition (62) étant positionnée à cheval sur une paroi (58') de la structure alvéolaire (52), ainsi que des étapes de mise en place de la couche acoustiquement résistive (54) et de la couche réflectrice (56).

14. Procédé d'assemblage selon la revendication précédente, **caractérisé en ce que**, préalablement à l'étape de mise en place des systèmes de partition (62), le procédé d'assemblage comprend une étape de réalisation de premières découpes (80) au niveau du premier ou deuxième bord d'extrémité (58.1', 58.2') des parois communes (58'), les deuxièmes extrémités (78.2, 78.2') des première et deuxième languettes (78, 78') de chaque système de partition (62) coopérant avec l'une des premières découpes (80) après l'étape de mise en place des systèmes de partition (62).
